## Europäisches Patentamt

## European Patent Office

## Office européen des brevets

(19)

(11) Veröffentlichungsnummer: **0 068 335**
**B1**

(12) **EUROPÄISCHE PATENTSCHRIFT**

(45) Veröffentlichungstag der Patentschrift:
**08.01.86**

(21) Anmeldenummer: **82105322.0**

(22) Anmeldetag: **18.06.82**

(51) Int. Cl.⁴: **B 60 R 25/02**

(54) **Vorrichtung zur Diebstahlsicherung von Autos.**

(30) Priorität: **20.06.81 DE 8118060 U**

(43) Veröffentlichungstag der Anmeldung:
**05.01.83 Patentblatt 83/1**

(45) Bekanntmachung des Hinweises auf die Patenterteilung:
**08.01.86 Patentblatt 86/2**

(84) Benannte Vertragsstaaten:
**DE FR GB IT**

(56) Entgegenhaltungen:
**FR - A - 620 940**
**US - A - 4 103 524**

(73) Patentinhaber: **Dausch, Ladislao Fenyes, Postfach 74, D-6208 Bad Schwalbach (DE)**

(72) Erfinder: **Dausch, Ladislao Fenyes, Postfach 74, D-6208 Bad Schwalbach (DE)**

(74) Vertreter: **Blumbach Weser Bergen Kramer Zwirner Hoffmann Patentanwälte, Sonnenbergerstrasse 43, D-6200 Wiesbaden 1 (DE)**

ACTORUM AG

## Beschreibung

Die übliche Diebstahlsicherung von Autos wird bekanntlich durch ein Lenkradschloss bewirkt. Aus verschiedenen Gründen wird der Riegel dieses Lenkradschlosses nicht so stark dimensioniert, dass er nicht mittels des Lenkrades abgeschert werden könnte. Häufig werden deshalb noch weitere Diebstahlsicherungsvorrichtungen von den Autofahrern angewendet.

Bei einer bekannten Diebstahlsicherung (FR-A 620 940) ist eine einteilige Stange mit U-förmigem Profilende zum Umgreifen der Lenkradspeiche vorgesehen und kann in dieser Lage durch ein Vorhängeschloss gesichert werden, das durch Aussparungen des U-Profilendes hindurchgreift. Nachteilig ist der Umstand, dass das Lenkrad nur locker umgriffen wird, so dass man unter Benutzung der Stange als Hebelarm die Diebstahlsicherung gewaltsam entfernen oder unwirksam machen kann.

Bei einer weiteren bekannten Diebstahlsicherung (US-A 4 103 524) wird eine längere Stange benötigt, die mit hakenartigen Fortsätzen am Griffring des Lenkrades eingreift, ferner ein Gleitbügel mit Schloss, der auf der Stange bis zur Anlage am Griffring verschoben und danach verriegelt werden kann. Nachteilig ist die grosse Ausdehnung dieser Diebstahlsicherung.

Der Erfindung liegt die Aufgabe zugrunde, eine gut sichtbare Vorrichtung zur Diebstahlsicherung von Autos zu schaffen, die nicht so leicht von einem Dieb überwunden werden kann.

Die gestellte Aufgabe wird aufgrund der Merkmale des Hauptanspruchs gelöst und durch die weiteren Massnahmen der Unteransprüche ausgestaltet und weiterentwickelt.

Die am Lenkrad anzubringende Vorrichtung zur Diebstahlsicherung ist gut sichtbar und dürfte so potentielle Diebe bereits vor dem Diebstahl abschrecken. Wenn sich ein Dieb trotzdem Zugang zum Wageninneren verschafft und das Lenkradschloss überwinden sollte, wird er nicht in die Lage versetzt, das Auto lenken zu können, denn der Schaft der Vorrichtung stösst am Fahrersitz und der Frontscheibe an. Auch wenn diese Hindernisse beseitigt wären, könnte das Lenkrad nicht voll gedreht werden, weil der Schaft in jedem Fall am Türholm des Autos anstösst. Wenn der Dieb das Lenkrad durchschneidet, um die Vorrichtung zu entfernen, wird das Lenkrad zerstört. Da die Vorrichtung aus Stahl hergestellt werden kann, ist es mühsam, diese zu durchschneiden; durch Einlagen im Schaft kann im übrigen dafür gesorgt werden, dass dieser nicht so einfach durchtrennt werden kann.

Für unterschiedliche Typen von Wagen sowie für LKW und Busse sind unterschiedliche Grössen, auch hinsichtlich der Maulweite, vorgesehen.

Ein Ausführungsbeispiel der Erfindung wird anhand der Zeichnung beschrieben. Dabei zeigt:

Fig. 1 eine Gehäusehälfte,
Fig. 2 die zweite Gehäusehälfte,

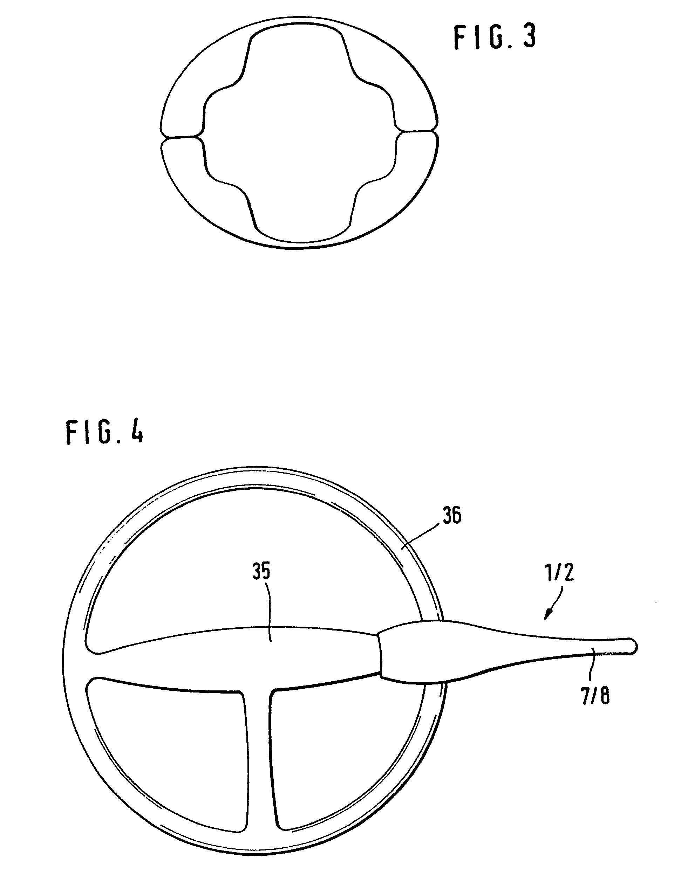

Fig. 3 eine Ansicht von vorne auf die Vorrichtung und
Fig. 4 die Vorrichtung an einem Lenkrad befestigt.

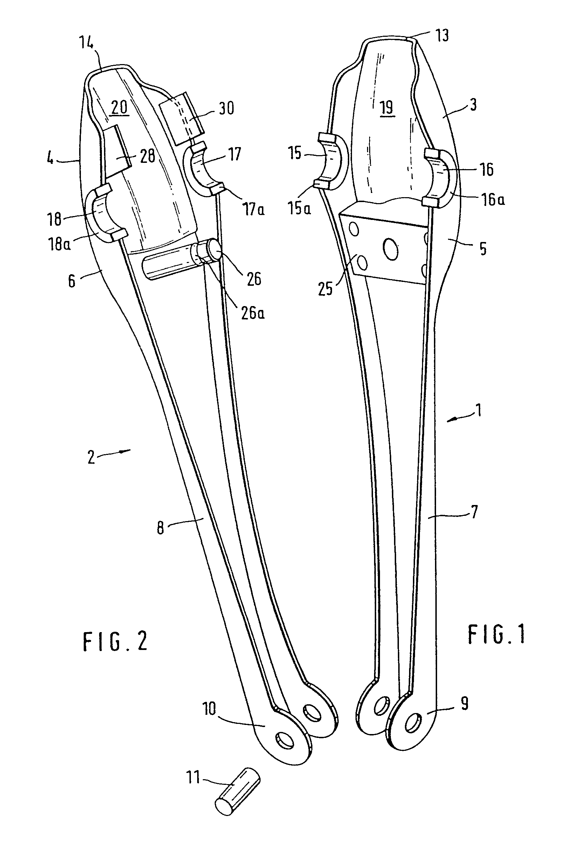

Die Vorrichtung zur Diebstahlsicherung an Autos enthält zwei Gehäusehälften 1 (Fig. 1) und 2 (Fig. 2), die jeweils ein verdicktes Ende 3, 4, ein Übergangsstück 5, 6 sowie einen Schaft 7, 8 mit einem schlanken Ende 9, 10 aufweisen. Die beiden Gehäusehälften 1, 2 sind mittels eines Gelenkbolzens 11 aneinander schwenkbar befestigt und können auseinandergeschwenkt oder geöffnet bzw. zusammengeklappt oder geschlossen werden. Im geschlossenen Zustand der Vorrichtung hat diese ein keulenförmiges Aussehen. Die beiden Gehäusehälften 1, 2 bestehen jeweils aus 1,8 mm starkem Stahlblech, welches durch Tiefziehen oder Pressen geformt ist.

Das verdickte Ende 3, 4 ist maulartig zum Umfassen eines Autolenkrades ausgebildet und weist zu diesem Zweck am vordersten Ende eine axial ausgerichtete Aussparung 13 bzw. 14 sowie – nahe der dicksten Stelle der Keule – zwei querverlaufende Aussparungen 15, 17 bzw. 16, 18 auf. Die Aussparungsränder können durch aufgesteckte Hartgummischalen 15a, 16a, 17a, 18a verbreitert werden, um Beschädigungen am zu sichernden Lenkrad zu vermeiden. Zum gleichen Zweck kann das Innere der beiden Gehäusehälften 1, 2 im Maulbereich durch Schaumgummi 19, 20 ausgekleidet werden.

Im Übergangsstück 5 ist ein Schloss 25 und im Übergangsstück 6 ein riegelartiges Schlossgegenstück 26 befestigt. Das Schlossgegenstück 26 ist als eingeschweisster Nietbolzen ausgebildet und weist eine Riegelnut 26a auf, in welche der Mechanismus des Schlosses 25 einfällt, wenn die Vorrichtung geschlossen wird. Im Übergangsstück 5 ist ein Schlüsselloch angebracht, durch welches hindurch das Schloss 25 mit einem Sicherheitsschlüssel gelöst werden kann.

In Abweichung vom dargestellten Ausführungsbeispiel kann das Schloss 25 zylinderförmig, mit radial betätigbarem Riegelbolzen, ausgebildet sein, während das Schlossgegenstück 26 muffenartig, mit innenliegender Riegelnut, gestaltet sein kann.

Um den Schlitz zwischen den beiden Gehäusehälften 1, 2 im geschlossenen Zustand der Vorrichtung zu verdecken, sind im Maul Zähne 28, 30 angeschweisst, die sich in den Bereich zwischen den Aussparungen 13 bis 18 parallel zur örtlichen Gehäusewandung erstrecken. Im geschlossenen Zustand der Vorrichtung ist es deshalb nicht möglich, mit einem Werkzeug in den Schlitz zwischen den beiden Gehäusehälften einzudringen und den Versuch zu unternehmen, die beiden Gehäusehälften gewaltsam voneinander zu trennen.

Das verdickte Ende 3, 4 mit Übergangsstück 5, 6 ist etwa 15 oder 20 cm lang; die Länge des Schaftes 7, 8 beträgt 20 cm; das Gesamtgerät ist somit etwa 35 oder 40 cm lang. Die Dicke der Keule am vorderen Ende beträgt etwa 6 cm oder darüber, während für den Schaft eine Dicke von 3 cm ausreicht.

Die Diebstahlsicherung arbeitet wie folgt: Das Lenkrad eines Autos weist bekanntlich einen Querholm 35 und einen Griffring 36 auf. Die beiden Gehäusehälften 1, 2 werden an der Verbindungsstelle zwischen Querholm 35 und Griffring 36 zusammengeklappt, so dass die Aussparungen 13, 14 den Querholm 35 und die Aussparungen 15/16 und 17/18 den Griffring 36 umfassen. Die Vorrichtung ragt mit ihrem Schaft 7/8 in den freien Raum des Wageninneren. Dieser freie Raum ist aber nicht so gross, dass das Lenkrad um ausreichende Beträge gedreht werden kann; vielmehr stösst das Schaftende am Fahrersitz und an der Frontscheibe an; auch der Türholm bildet ein unüberwindliches Hindernis gegen Drehen des Lenkrades.

Im Gehäuseinneren zwischen Schloss 25 bzw. Schlossgegenstück 26 und schlankem Ende 9 bzw. 10 kann eine Einlage angebracht werden, welche das Durchtrennen des Schaftes 7/8 erschwert. Eine solche Einlage kann auch in einer rauchentwickelnden Substanz oder dergleichen bestehen.

In dem zeichnerisch dargestellten Ausführungsbeispiel hat die Vorrichtung das Aussehen einer «Kobra»; es ist aber auch möglich, die Übergangsstücke 5, 6 länger zu gestalten, so dass die Vorrichtung insgesamt ein fischähnliches Aussehen erhält. Die angegebenen Masse sind für Personenkraftwagen-Diebstahlsicherungsvorrichtungen gedacht; es versteht sich, dass für Lastkraftwagen und Busse grössere Abmasse, insbesondere des Mauls, in Betracht kommen.

## Patentansprüche

1. Vorrichtung zur Diebstahlsicherung von Autos, mit einem quer am Lenkrad zu befestigenden Riegel, gekennzeichnet durch folgende Merkmale:

ein keulenförmiges, längsweise in zwei Gehäusehälften (1, 2) geteiltes Gehäuse weist ein verdicktes Ende (3, 4) und einen Schaft (7, 8) mit einem schlanken Ende (9, 10) auf;
am schlanken Ende (9, 10) sind die Gehäusehälften (1, 2) gelenkig (11) miteinander verbunden;
das andere, verdickte Ende (3, 4) ist maulartig, mit aufeinander passenden zur Aufnahme des Griffrings eines Lenkrades geeigneten Aussparungen (13–18) ausgebildet;
am Übergangsstück (5, 6) zwischen dem verdickten Ende (3, 4) und dem Schaft (7, 8) ist im Inneren der einen Gehäusehälfte (1) ein Schloss (25) und in der anderen Gehäusehälfte (2) ein Schlossgegenstück (26) angebracht.

2. Vorrichtung nach Anspruch 1, dadurch gekennzeichnet, dass das verdickte Ende (3, 4) mit Übergangsstück (5, 6) und der Schaft (7, 8) jeweils etwa 20 cm lang sind.

3. Vorrichtung nach Anspruch 1 oder 2, dadurch gekennzeichnet, dass das verdickte Ende (3, 4) etwa 6 cm dick ist.

4. Vorrichtung nach einem der Ansprüche 1 bis 3, dadurch gekennzeichnet, dass pro Gehäusehälfte (1, 2) drei aufeinander passende Aussparungen (13/14; 15/16; 17/18) vorgesehen sind, wovon die eine Aussparung (13, 14) axial ausgerichtet und am verdickten Ende (3, 4) angebracht ist, während die beiden anderen Aussparungen (15, 16 bzw. 17, 18) nahe der dicksten Stelle mit quer verlaufender Achse angeordnet sind.

5. Vorrichtung nach Anspruch 4, dadurch gekennzeichnet, dass im Bereich zwischen den Aussparungen (13–18), nahe der Gehäusewandung, im Gehäuseinneren Zähne (28, 30) angebracht sind, welche im geschlossenen Zustand der Vorrichtung den Spalt zwischen den beiden Gehäusehälften (1, 2) verdecken.

6. Vorrichtung nach einem der Ansprüche 1 bis 5, dadurch gekennzeichnet, dass die Gehäusehälften (1, 2) aus Stahlblech bestehen.

## Claims

1. An anti-theft device for automobiles comprising a bolt adapted to be secured transversely to the steering wheel, characterised by the following features:

a club-shaped casing divided longitudinally into two casing halves (1, 2) has a thickened end (3, 4) and an arm (7, 8) with a thin end (9, 10);
the casing halves (1, 2) are interconnected pivotally (11) at the thin end (9, 10);
the other thickened end (3, 4) resembles jaws and is formed with recesses (13–18) adapted to receive the grip ring of a steering wheel;
in the transition member (5, 6) between the thickened end (3, 4) of the arms (7, 8) a lock (25) is provided inside one casing half (1) and a member (26) co-operating with the lock (25) is provided in the other casing half (2).

2. A device according to claim 1, characterised in that the thickened end (3, 4) with the transition member (5, 6) is about 20 cm long and the arm (7, 8) is about 20 cm long.

3. A device according to claim 1 or 2, characterised in that the thickened end (3, 4) is about 6 cm thick.

4. A device according to any of claims 1–3, characterised in that per casing half (1, 2) there are three matching recesses (13/14; 15/16; 17/18), one recess (13, 14) extending axially and being disposed at the thickened end (3, 4) while the other two recesses (15, 16; 17, 18) are disposed near the thickest part with a transverse axis.

5. A device according to claim 4, characterised in that teeth (28, 30) are disposed inside the casing and near the wall thereof in the zone between the recesses (13–18) and, with the device in the closed state, mask the gap between the two casing halves (1, 2).

6. A device according to any of claims 1 to 5, characterised in that the casing halves (1, 2) are made of sheet steel.

**Revendications**

1. Dispositif anti-vol pour automobiles, avec un verrou à fixer transversalement sur le volant, caractérisé en ce qu'il présente un boîtier en forme de massue divisé en deux demi-boîtiers (1, 2) dans le sens de la longueur un bout renflé (3, 4) et un tige (7, 8) avec un bout étancé (9, 10); les deux demiboîtiers (1, 2) sont articulés (11) par leur bout élancé (9, 10), l'autre bout renflé (3, 4) est réalisé sous la forme d'une mâchoire, avec des découpes (13, 18) adaptées l'une à l'autre et propres à faire prise sur la couronne d'un volant; sur la pièce de transition (5, 6) entre le bout renflé (3, 4) et la tige (7, 8) sont disposés une serrure (25) à l'intérieur d'un des demi-boîtiers (1) et un élément de serrure complémentaire (26) dans l'autre demi-boîtier (2).

2. Dispositif selon la revendication 1, caractérisé en ce que le bout renflé (3, 4), avec la pièce de transition (5, 6) et la tige (7, 8) s'étendent sur une longueur d'environ 20 cm.

3. Dispositif selon les revendications 1 ou 2, caractérisé en ce que l'extrémité renflée (3, 4) est épaisse d'environ 6 cm.

4. Dispositif selon une des revendications 1 à 3, caractérisé en ce que pour chaque demi-boîtier trois découpes adaptées les unes aux autres (13/14; 15/16; 17/18) sont prévues, parmi lesquelles une découpe (13, 14) est dirigée axialement, et est ménagée dans le bout renflé (3, 4), tandis que les deux autres découpes (15, 16 et 17, 18) sont disposées près de l'emplacement le plus épais selon un axe transversal.

5. Dispositif selon la revendication 4, caractérisé en ce que dans la zone s'étendant entre les découpes (13, 18), près de la paroi du boîtier, à l'intérieur du boîtier, sont disposées des dents (28, 30), qui obturent la fente entre les deux demi-boîtiers, lorsque le dispositif est fermé.

6. Dispositif selon une des revendications 1 à 5, caractérisé en ce que les deux demi-boîtiers (1, 2) sont constitués de tôle d'acier.

FIG. 2

FIG. 1

FIG. 3

FIG. 4

36

35

1/2

7/8